# EUROPÄISCHE PATENTANMELDUNG

(11) **EP 4 465 525 A1**
(43) Veröffentlichungstag der Anmeldung: **20.11.2024**
(21) Anmeldenummer: 24171179.5
(22) Anmeldetag: 19.04.2024
(51) Int. Cl.: H02S 20/10, F24S 25/12, F24S 25/617, F24S 25/65

(54) **UNTERKONSTRUKTION FÜR EINE SOLARANLAGE UND VERFAHREN ZUR MONTAGE EINER UNTERKONSTRUKTION**

(30) Priorität: 16.05.2023 DE 102023112936
(71) Anmelder: NOVO-TECH GMBH & CO. KG, 06449 Aschersleben (DE)
(72) Erfinder:
(74) Vertreter: Dantz, Jan Henning

(57) **Zusammenfassung**

Eine Unterkonstruktion (1) für eine Solaranlage umfasst eine Vielzahl von im Erdboden montierbaren Tragelementen (2), die jeweils mindestens einen aus dem Erdboden nach oben ragenden Pfosten (3) aufweisen und die Pfosten (3) über Streben (8) miteinander verbunden sind, um ein Gestell zur Fixierung von Photovoltaikmodulen auszubilden, wobei die Pfosten (3) aus einem extrudierten Material aus einer Mischung aus Kunststoff und Naturfasern enthaltenden Füllstoff hergestellt sind. Ferner betrifft die Erfindung ein Verfahren zur Montage einer Unterkonstruktion.

## Beschreibung

Die vorliegende Erfindung betrifft eine Unterkonstruktion für eine Solaranlage, mit einer Vielzahl von im Erdboden montierbaren Tragelementen, die jeweils mindestens einen aus dem Erdboden nach oben ragenden Pfosten aufweisen und die Pfosten über Streben miteinander verbunden sind, um ein Gestell zur Fixierung von Photovoltaikmodulen auszubilden, und ein Verfahren zur Montage einer Unterkonstruktion für eine Solaranlage.

Aus der DE 10 2008 057 387 A1 ist eine Solaranlage bekannt, bei der ein Pfosten über ein Fundament im Erdboden verankert wird. An dem Pfosten ist eine Nachführeinrichtung für die Photovoltaikmodule angeordnet, damit diese optimal zur Sonneneinstrahlung ausgerichtet sind. Für eine stabile Abstützung der Photovoltaikanlage wird meist ein Aushub mit einem Betonfundament eingesetzt, das den nach oben ragenden Pfosten stabil abstützt. Eine solche Bauweise ist im Hinblick auf eine CO₂-Bilanz nachteilig, weil Beton und aus Metall bestehende Pfosten energieintensiv in der Herstellung sind. Zudem besteht der Nachteil, dass vergossener Beton mit Metalleinlagen nur aufwändig zu trennen und schwer recycelbar ist.

DE 21 2012 000 079 U1 offenbart eine Tragkonstruktion für eine Solaranlage aus Aluminiumprofilen, die nach oben ragende Pfosten zur Fixierung von Photovoltaikmodulen aufweist. Am Boden sind Fundationsprofile und Querprofile gitterförmig miteinander verbunden.

In der EP 2 256 432 A2 sind Ständer für Photovoltaikmodule offenbart, die senkrecht von einer Grundschiene hervorstehende Pfosten und eine geneigte Traverse umfassen, die über Befestigungsmittel aneinander fixiert sind, um die Neigung in einer optimalen Position einstellen zu können.

Es ist daher Aufgabe der vorliegenden Erfindung, eine Unterkonstruktion für eine Solaranlage sowie ein Verfahren zur Montage einer Unterkonstruktion zu schaffen, die unter ökologischen Gesichtspunkten eine optimierte Herstellung und eine effektive Montage ermöglichen.

Diese Aufgabe wird mit einer Unterkonstruktion mit den Merkmalen des Anspruches 1 sowie einem Verfahren zur Montage mit den Merkmalen des Anspruches 10 gelöst.

Die erfindungsgemäße Unterkonstruktion für eine Solaranlage umfasst eine Vielzahl von im Erdboden montierbaren Tragelementen, die jeweils mindestens einen aus dem Erdboden nach oben ragenden Pfosten aufweisen, wobei die Pfosten über Streben miteinander verbunden sind, um ein Gestell zur Fixierung von Photovoltaikmodulen auszubilden. Die Pfosten sind dabei aus einem extrudierten Material mit einer Mischung aus Kunststoff und Naturfasern, insbesondere lignozellulosehaltige Fasern, enthaltenden Füllstoff hergestellt. Der Einsatz solcher Pfosten aus extrudiertem Material ermöglicht eine umweltfreundliche Gestaltung der Unterkonstruktion mit deutlich besserer CO₂-Bilanz, weil das Material des Pfostens Naturfasern, insbesondere lignozellulosehaltige Fasern, beispielsweise aus Holzabfällen, enthält, und somit als CO₂-Senke dient. Durch Verwendung solcher Materialien kann bei der Herstellung der Unterkonstruktion CO₂ gebunden werden. Bei Einsatz von Beton und Metall wird hingegen viel Energie benötigt. Zudem kann durch die Einbettung der lignozellulosehaltigen Fasern in eine Matrix aus Kunststoff eine Witterungsbeständigkeit und eine Beständigkeit gegenüber biologischen Abbauprozessen im Erdreich erhalten werden, so dass über die angestrebte Nutzungsdauer von 20 oder 30 Jahren eine Beständigkeit gewährleistet ist. Nach dem Gebrauch der Unterkonstruktion kann diese durch Recyclingprozesse wiederverwertet werden. Die extrudierten Profile können zerkleinert und erneut einem Produktionsprozess beigemengt werden.

Vorzugsweise steht der Pfosten an dem Tragelement jeweils in einem Winkel zwischen 25° bis 70° nach oben hervor, so dass die Photovoltaikmodule in der gewünschten Neigung montiert werden können.

Der extrudierte Pfosten weist vorzugsweise eine Länge zwischen 3 m bis 6 m, insbesondere zwischen 4 m bis 5 m, auf, so dass die Photovoltaikmodule in ausreichendem Abstand vom Erdboden montiert werden können. Ein Teil des Pfostens, beispielsweise zwischen 50 cm bis 1,20 m, befindet sich unter dem Erdboden, während der übrige Teil des Pfostens nach oben von dem Erdboden hervorsteht. Dadurch können die Photovoltaikmodule in einer Höhe montiert werden, die eine Nutzung des Erdbodens für landwirtschaftliche Zwecke oder zur Tierhaltung weiterhin ermöglicht. Die Photovoltaikmodule können in einer Höhe von mindestens 1 m, beispielsweise mindestens 1,5 m über dem Erdboden angebracht sein.

Für eine Abstützung weist jedes Tragelement ein im Erdboden im Wesentlichen horizontal angeordnetes Ankerprofil und ein nach oben hervorstehendes Stützprofil auf. Das Ankerprofil und das Stützprofil sind dabei bevorzugt mit dem Pfosten an beabstandeten Verbindungsstellen verbunden, beispielsweise über mechanische Befestigungsmittel oder ein Gelenk fixiert. Wenn der Pfosten gelenkig mit dem Ankerprofil und dem Stützprofil verbunden ist, kann die Unterkonstruktion flexibel mit unterschiedlichen Neigungen des Pfostens montiert werden. Hierfür muss nur das in der Montageposition vertikal ausgerichtete Stützprofil in der gewünschten Länge abgeschnitten werden, um die Neigung des Pfostens einzustellen, wobei der Pfosten gelenkig mit dem Ankerprofil verbunden ist.

In einer bevorzugten Ausgestaltung ist das Stützprofil, die Streben und/oder das Ankerprofil jedes Tragelementes aus einem extrudierten Material aus einer Mischung aus Kunststoff und einem lignozellulosehaltigen Fasern enthaltenen Füllstoff hergestellt. Dadurch kann im Wesentlichen die gesamte Unterkonstruktion aus einem extrudierten Verbundmaterial hergestellt sein, der lignozellulosehaltigen Fasern, beispielsweise Holzabfälle, Stroh, Heu, Reisschalen, Bambus, Gräser oder andere Naturfasern, einsetzt. Der Kunststoff kann beispielsweise ein Polymer oder eine Mischung aus Polymeren umfassen, insbesondere Polypropylen, Polyethylen oder andere Polymere. Ferner können auch weitere Zusatzstoffe als Füllstoffe zugegeben werden, beispielsweise pulverförmiger Zement, Fasern aus Kunststoff oder Glas oder anderen Materialien. Der Anteil an Füllstoffen, insbesondere an Naturfasern, kann über 50 % betragen, beispielsweise zwischen 50 % bis 80 %. Trotz des hohen Anteils an Naturstoffen kann das Material auch in feuchten Umgebungen, wie im Erdboden, durch die Matrix aus Kunststoff witterungsbeständig und verwesungsbeständig ausgebildet sein. Die im Extrusionsverfahren hergestellten Profile können dabei als Vollprofile oder als Hohlprofile mit ein oder mehrere Hohlkammern ausgebildet sein.

Bei jedem Tragelement ist vorzugsweise der Abstand der Verbindung des Pfostens von dem Ankerprofil zu der Verbindung des Pfostens zu dem Stützprofil mindestens 20 % kürzer als der Pfosten ausgebildet. Der Pfosten überragt somit die Verbindung zu dem Stützprofil.

Jedes Tragelement umfasst vorzugsweise zwei Gelenkelemente mit zwei relativ zueinander drehbaren Teilen. Ein erstes Gelenkelement kann dabei zwischen Ankerprofil und Pfosten und ein zweites Gelenkelement zwischen Pfosten und Stützprofil montiert sein. Jedes Gelenkelement kann dabei ein Schwert an einem ersten Teil aufweisen, das in eine schlitzförmige Aufnahme an einem zweiten Teil eingreift, wobei eine Drehachse die Wände der Aufnahme und das Schwert durchgreift. Die Gelenkelemente können dabei mit dem Pfosten, Stützprofil und/oder Ankerprofil über Befestigungsmittel, beispielswiese Schrauben, verbunden sein.

Bei dem erfindungsgemäßen Verfahren zur Montage einer Unterkonstruktion für eine Solaranlage wird zunächst mindestens eine Vertiefung in einem Erdboden ausgehoben, beispielsweise bis zu einer Tiefe zwischen 50 cm bis 1,5 m. Anschließend werden mehrere Tragelemente in die mindestens eine Vertiefung eingefügt, wobei jedes Tragelement einen Pfosten aus einem extrudierten Material aus einer Mischung aus Kunststoff und einem Naturfasern, insbesondere lignozellulosehaltige Fasern, enthaltenden Füllstoff umfasst. Durch Zuschütten der Vertiefung wird dann jedes Tragelement zumindest teilweise unter der Erdoberfläche angeordnet. Vor oder nach dem Zuschütten der Vertiefung wird der Pfosten mit Streben zur Ausbildung einer Unterkonstruktion für Photovoltaikmodule verbunden. Dadurch lässt sich die Unterkonstruktion ökologisch herstellen, insbesondere bindet der Pfosten über die Naturstoffe, insbesondere über die lignozellulosehaltigen Fasern, CO₂ und lässt sich mit vergleichsweise geringem Energieaufwand herstellen.

Vorzugsweise ist jeder Pfosten mit einem Ankerprofil und einem Stützprofil verbunden, wobei das Ankerprofil in die Vertiefung im Wesentlichen horizontal eingelegt wird. Dadurch bilden Ankerprofil, Stützprofil und Pfosten eine Dreieckskonstruktion aus, die für eine stabile Abstützung des Pfostens sorgt, der effektiv montiert werden kann. Zumindest ein Teil der Tragelemente, bevorzugt alle Tragelemente, sind ohne Betonanker lose in den Erdboden eingelegt. Dadurch wird der Einsatz von Beton vermieden oder reduziert, was die ökologische Bilanz der Unterkonstruktion weiter verbessert. Die auftretenden Windlasten und die Gewichtskräfte werden durch die einzelnen Tragelemente aufgenommen, die vom Erdboden umschlossen sind. Das Ankerprofil kann beispielsweise in einer Tiefe zwischen 50 cm bis 1,5 m angeordnet sein.

Die Erfindung wird nachfolgend anhand zweier Ausführungsbeispiele mit Bezug auf die beigefügten Zeichnungen näher erläutert. Es zeigen:

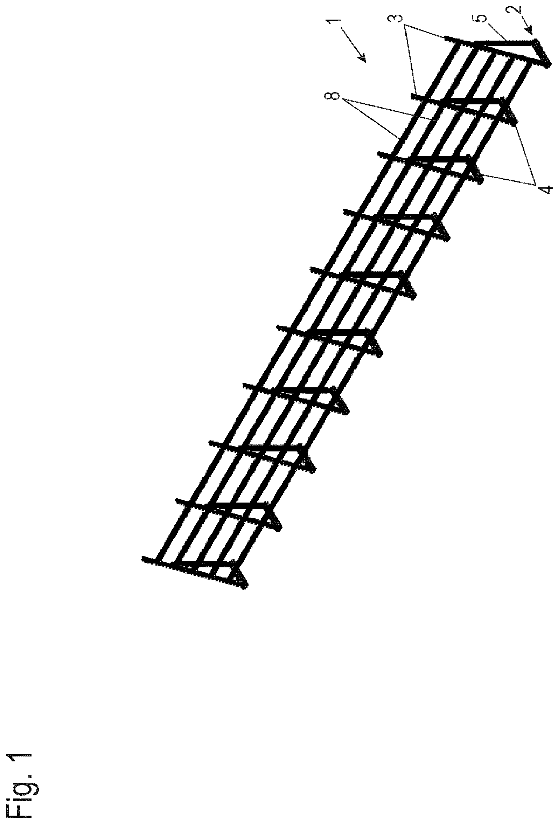

- Figur 1: eine perspektivische Ansicht eines ersten Ausführungsbeispiels einer erfindungsgemäßen Unterkonstruktion für eine Solaranlage;
- Figuren 2A bis 2C: mehrere Ansichten der Unterkonstruktion der Figur 1;
- Figur 3: eine perspektivische Ansicht eines zweiten Ausführungsbeispiels einer erfindungsgemäßen Unterkonstruktion;
- Figuren 4A bis 4D: mehrere Ansichten der Unterkonstruktion der Figur 3, und
- Figuren 5A und 5B: zwei Ansichten eines Gelenkelementes der Unterkonstruktion.

Eine Unterkonstruktion 1 umfasst eine Vielzahl von im Erdboden montierbaren Tragelementen 2, die einen schräg nach oben ragenden Pfosten 3 umfassen. Die Tragelemente 2 besitzen dabei eine dreieckförmige Konstruktion mit einem im Wesentlichen horizontal ausgerichteten Ankerprofil 4 und einem vertikal ausgerichteten Stützprofil 5. Der Pfosten 3 ist an dem Ankerprofil 4 und dem Stützprofil 5 des jeweiligen Tragelementes 2 fixiert.

Benachbarte Pfosten 3 sind über mehrere Streben 8 miteinander verbunden, so dass eine Unterkonstruktion 1 zur Montage von plattenförmigen Photovoltaikmodulen geschaffen wird. Dabei können die Photovoltaikmodule in einer gewissen Höhe über dem Erdboden, beispielsweise in einer Höhe von mehr als 1 m, insbesondere einer Höhe von mehr als 1,5 m, montiert werden, so dass die Fläche auf dem Erdboden für landwirtschaftliche Zwecke genutzt werden kann.

Die Länge der Unterkonstruktion 1 kann beliebig gewählt werden, je nachdem, wie viele Pfosten 3 nebeneinander montiert werden. Die Pfosten 3 sind jeweils über Streben 8 miteinander verbunden.

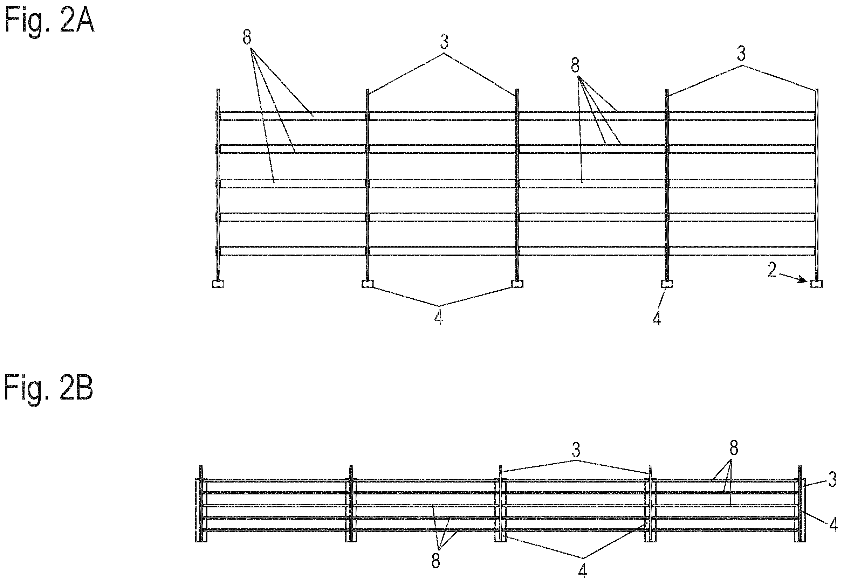

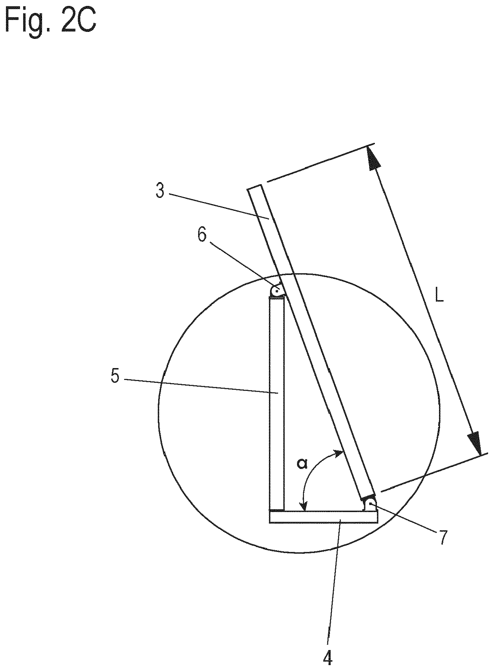

In den Figuren 2A bis 2C ist die Unterkonstruktion 1 in verschiedenen Ansichten gezeigt. In Figur 2C ist erkennbar, dass der Pfosten 3 in einem Winkel α zur Horizontalen hervorsteht, beispielswiese zwischen 60° und 80°. Jedes Tragelement 2 bildet eine Dreieckskonstruktion mit einem im Wesentlichen horizontalen Ankerprofil 4 und einem rechtwinklig dazu montierten Stützprofil 5 aus. Der Pfosten 3 ist dabei an dem Stützprofil 6 über ein erstes Gelenkelement 6 und an dem Ankerprofil 4 über ein zweites Gelenkelement 7 gelenkig fixiert. Die Länge L des Pfostens 3 kann beispielsweise zwischen 4 und 6 m betragen. Ein unterer Abschnitt des Pfostens 3 ist dabei in der montierten Position im Erdboden angeordnet. Auch das Ankerprofil 4 und zumindest ein unterer Teil des Stützprofils 5 ist im Erdboden eingeschlossen.

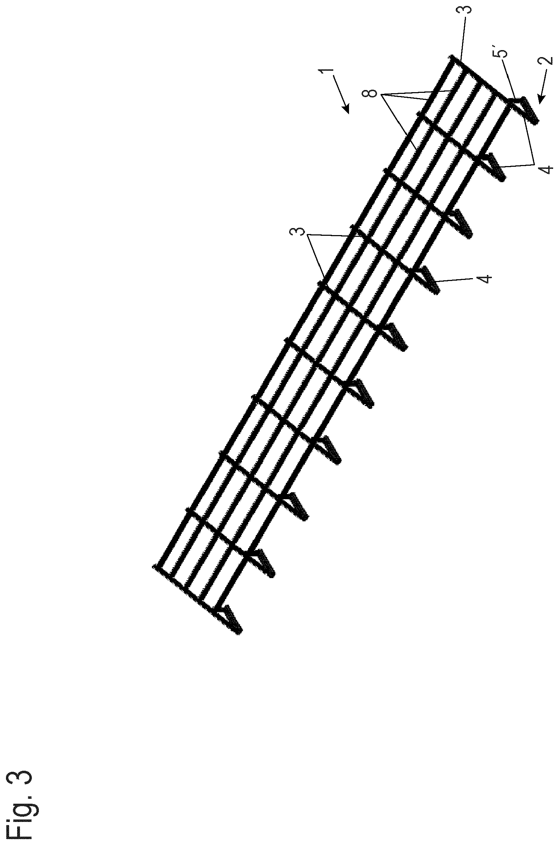

In Figur 3 ist eine modifizierte Unterkonstruktion 1 gezeigt, bei der die Pfosten 3 in einem anderen Winkel schräg nach oben hervorstehen. Die Unterkonstruktion 1 umfasst wie bei dem vorangegangenen Ausführungsbeispiel eine Vielzahl von Tragelementen 2, die jeweils ein horizontales Ankerprofil 4 und ein vertikales Stützprofil 5' umfassen, das eine kürzere Länge besitzt als das Stützprofil 5.

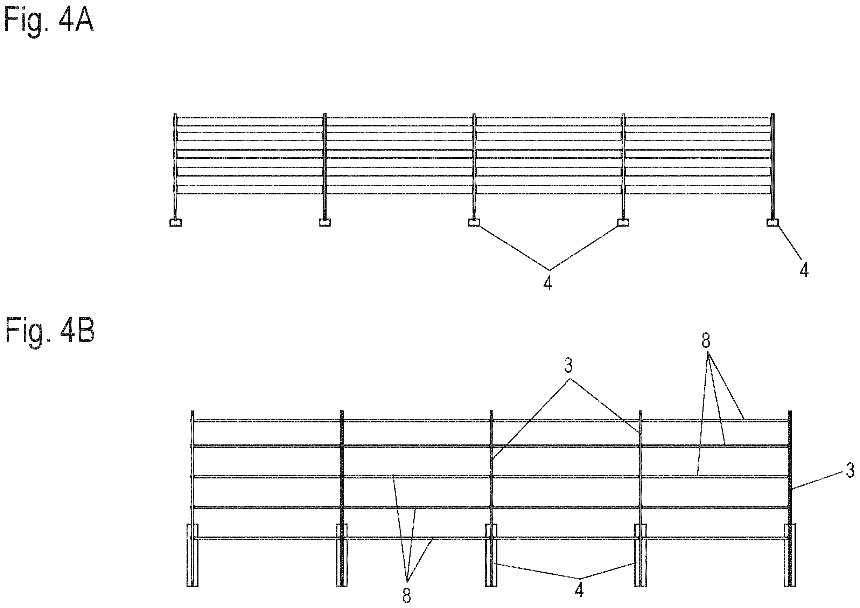

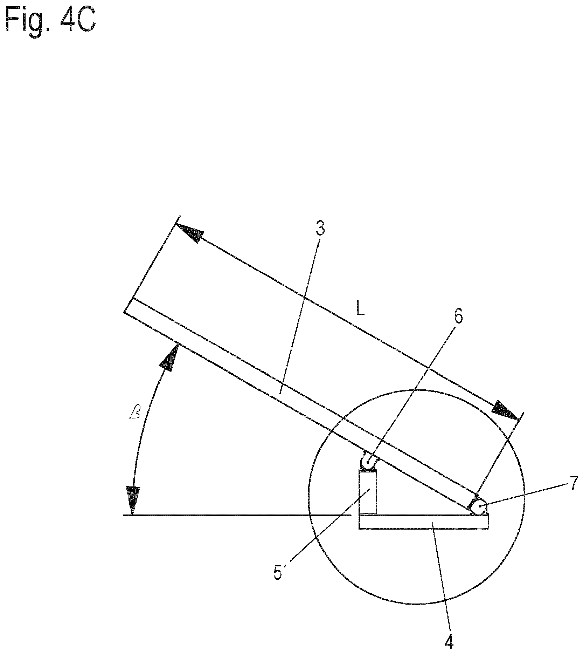

Wie in den Figuren 4A bis 4C gezeigt ist, ist das kürzere Stützprofil 5' über ein Gelenkelement 6 mit dem Pfosten 3 verbunden, und das Ankerprofil 4 über ein zweites Gelenkelement 7. Der Pfosten 3 ragt somit gegenüber der Horizontalen um den Winkel β hervor, beispielsweise in einem Bereich zwischen 20 und 40°. Je nach Länge des Stützprofils 5' können unterschiedliche Neigungen der Pfosten 3 eingestellt werden.

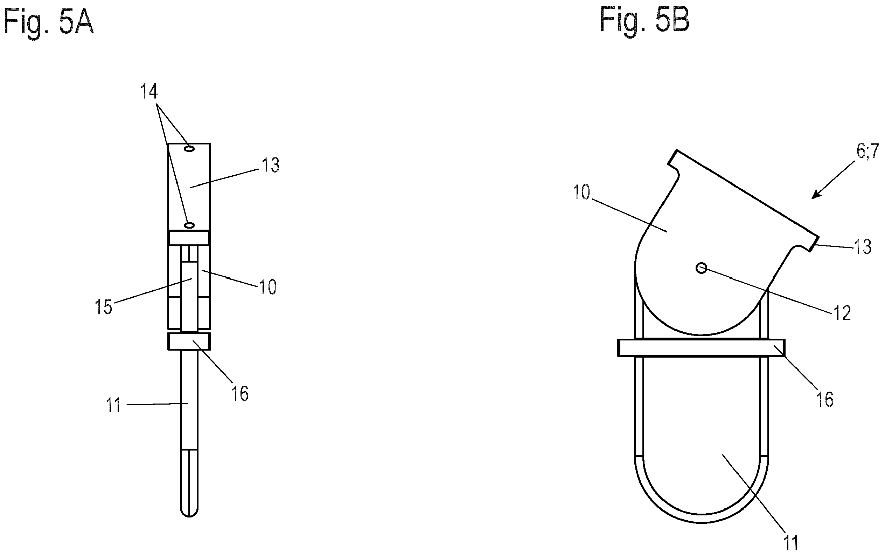

In den Figuren 5A und 5B ist ein Gelenkelement 6 oder 7 im Detail gezeigt. Jedes Gelenkelement 6 oder 7 umfasst ein erstes Teil 11, das ein Schwert 15 besitzt, das in eine schlitzförmige Aufnahme an dem zweiten Teil 10 einfügbar ist. Das Schwert 15 und die Wände der schlitzförmigen Aufnahme 10 sind durch eine Drehachse 12 umgriffen, so dass das zweite Teil 10 drehbar an dem ersten Teil 11 gehalten ist. An dem zweiten Teil 10 ist an dem Ende ein Flansch 13 ausgebildet, an dem Öffnungen 14 für Befestigungsmittel, beispielsweise Schrauben, vorgesehen sind, so dass das zweite Teil 10 an dem Ankerprofil 4, dem Stützprofil 5 oder dem Pfosten 3 fixiert werden kann. Das erste Teil 11 weist ebenfalls einen Flansch 16 auf, der senkrecht zu dem Schwert 15 angeordnet ist und Öffnungen für Befestigungsmittel aufweist. Das erste Teil 11 weist einen von dem Flansch 16 an gegenüberliegenden Seiten hervorstehenden Abschnitt auf, kann aber auch eine andere Geometrie haben.

Zur Montage einer der in den vorherigen Figuren gezeigten Unterkonstruktion wird zunächst ein Aushub mit mindestens einer Vertiefung in einen Erdboden eingebracht, beispielsweise in Form eines Kanals, der eine Tiefe zwischen 50 cm bis 1,5 m aufweist. Alternativ kann auch für jedes Tragelement 2 eine einzelne Vertiefung gebaggert werden. Die Tragelemente 2 werden dann lose in die Vertiefung oder den Kanal eingelegt, und der Pfosten 3 steht in dem gewünschten Neigungswinkel von dem Ankerprofil 4 hervor. In dieser Position können nun die Streben 8 zwischen den einzelnen Pfosten 3 montiert werden, bis die Unterkonstruktion 1 die gewünschte Größe besitzt. Dann kann die Vertiefung zugeschüttet werden, so dass das Ankerprofil 4 und ein unterer Teil des Pfostens 3 und des Stützprofils 5 unter dem Erdboden angeordnet sind. Eine Ausbildung eines Betonfundamentes ist vorzugsweise für keines der Tragelemente 2 vorgesehen, optional können aber auch einzelne Tragelemente zusätzlich über ein Betonfundament fixiert werden.

Die Pfosten 3, die Ankerprofile 4, die Stützprofile 5 sind vorzugsweise alle aus einem extrudierten Material aus einer Mischung aus Kunststoff und Naturfasern, insbesondere lignozellulosehaltige Fasern, hergestellt, wobei optional auch weitere Füllstoffe verwendet werden können. Der Anteil an Kunststoff beträgt vorzugsweise zwischen 10 % und 40 %, um das Material witterungsbeständig und verwesungsbeständig auszubilden.

### Bezugszeichenliste

- 1: Unterkonstruktion
- 2: Tragelement
- 3: Pfosten
- 4: Ankerprofil
- 5: Stützprofil
- 6: Gelenkelement
- 7: Gelenkelement
- 8: Streben

- 10: Zweite Teil
- 11: Erste Teil
- 12: Drehachse
- 13: Flansch
- 14: Öffnung
- 15: Schwert
- 16: Flansch

- α: Winkel
- β: Winkel
- L: Länge

## Patentansprüche

1. Unterkonstruktion (1) für eine Solaranlage, mit einer Vielzahl von im Erdboden montierbaren Tragelementen (2), die jeweils mindestens einen aus dem Erdboden nach oben ragenden Pfosten (3) aufweisen und die Pfosten (3) über Streben (8) miteinander verbunden sind, um ein Gestell zur Fixierung von Photovoltaikmodulen auszubilden, **dadurch gekennzeichnet, dass** die Pfosten (3) aus einem extrudierten Material aus einer Mischung aus Kunststoff und Naturfasern enthaltende Füllstoffe hergestellt sind.

2. Unterkonstruktion nach Anspruch 1, **dadurch gekennzeichnet, dass** die Pfosten (3) an den Tragelementen (2) in einem Winkel zwischen 25° bis 70° nach oben hervorstehen.

3. Unterkonstruktion nach Anspruch 1 oder 2, **dadurch gekennzeichnet, dass** die Pfosten (3) eine Länge zwischen 3 bis 6 m, insbesondere 4 bis 5 m, aufweisen.

4. Unterkonstruktion nach einem der vorhergehenden Ansprüche, **dadurch gekennzeichnet, dass** jedes Tragelement (2) ein im Erdboden im Wesentlichen horizontal angeordnetes Ankerprofil (4) und ein nach oben hervorstehendes Stützprofil (5) umfasst und das Ankerprofil (4) und das Stützprofil (5) mit dem Pfosten (3) des Trageelementes (2) verbunden sind.

5. Unterkonstruktion nach Anspruch 4, **dadurch gekennzeichnet, dass** der Pfosten (3) gelenkig mit dem Ankerprofil (4) und dem Stützprofil (5) verbunden ist.

6. Unterkonstruktion nach Anspruch 4 oder 5, **dadurch gekennzeichnet, dass** das Stützprofil (5), die Streben (8) und/oder das Ankerprofil (4) aus einem extrudierten Material aus einer Mischung aus Kunststoff und einem lignozellulosehaltige Fasern enthaltenden Füllstoff hergestellt sind.

7. Unterkonstruktion nach einem der Ansprüche 4 bis 6, **dadurch gekennzeichnet, dass** der Abstand der Verbindung des Pfostens (3) von dem Ankerprofil (4) zu der Verbindung des Pfostens (3) zu dem Stützprofil (5) mindestens 20 % kürzer als der Pfosten (3) ist.

8. Unterkonstruktion nach einem der Ansprüche 4 bis 7, **dadurch gekennzeichnet, dass** jedes Tragelement (2) zwei Gelenkelemente (6, 7) mit zwei relativ zueinander drehbaren Teilen (10, 11) umfasst.

9. Unterkonstruktion nach Anspruch 8, **dadurch gekennzeichnet, dass** jedes Gelenkelement (6, 7) ein Schwert (15) an einem ersten Teil (11) umfasst, das in eine schlitzförmige Aufnahme in dem zweiten Teil (10) eingreift und eine Drehachse (12) die Wände der Aufnahme und das Schwert (15) durchgreift.

10. Verfahren zur Montage einer Unterkonstruktion (1) für eine Solaranlage mit den folgenden Schritten:
- Aushub mindestens einer Vertiefung in einem Erdboden;
- Einfügen mehrerer Tragelemente (2) in die mindestens eine Vertiefung, wobei jedes Tragelement (2) einen Pfosten (3) aus einem extrudierten Material aus einer Mischung aus Kunststoff und einem Naturfasern enthaltenden Füllstoff umfasst;
- Zuschütten der Vertiefung und Anordnen jedes Trageelementes (2) unter dem Erdboden, und
- Verbinden der Pfosten (3) mit Streben (8) zur Ausbildung einer Unterkonstruktion für Photovoltaikmodule.

11. Verfahren nach Anspruch 10, **dadurch gekennzeichnet, dass** jeder Pfosten (3) mit einem Ankerprofil (4) und einem Stützprofil (5) verbunden ist und das Ankerprofil (4) in die Vertiefung im Wesentlichen horizontal eingelegt wird.

12. Verfahren nach Anspruch 10 oder 11, **dadurch gekennzeichnet, dass** zumindest ein Teil der Tragelemente (2) ohne Betonanker lose in den Erdboden eingelegt wird.
